# FASCICULE DE BREVET EUROPEEN

(11) **EP 1 306 120 B1**
(45) Date de publication et mention de la délivrance du brevet: **07.03.2007**
(21) Numéro de dépôt: 02292667.9
(22) Date de dépôt: 25.10.2002
(51) Int. Cl.: B01D 46/52, B60H 3/06

(54) **Dispositif de filtration d'air et installation de circulation d'air dans un véhicule automobile comprenant ce dispositif**
Luftfilter und Luftzirkulationssystem für Kraftfahrzeuge mit dem Luftfilter
Air filter and air circulation system for a motor vehicle comprising the air filter

(30) Priorité: 29.10.2001 FR 0113972
(43) Date de publication de la demande: 02.05.2003
(73) Titulaire: Valeo Matériaux de Friction, 87020 Limoges (FR)
(72) Inventeur: Gilles, Olivier, 14250 Hottot les Bagues (FR)
(74) Mandataire: Remy, Vincent Noel Paul

(56) Documents cités:
- FR-A- 2 806 318
- US-A- 5 509 950
- US-A- 5 679 122

## Description

La présente invention concerne un dispositif de filtration d'air et une installation de circulation d'air dans un véhicule automobile comprenant ce dispositif.

Elle s'applique en particulier à la filtration d'air circulant dans un véhicule automobile, notamment d'air climatisé ou non destiné à circuler dans l'habitacle du véhicule.

On connaît déjà dans l'état de la technique un dispositif de filtration d'air, du type comprenant un cadre de canalisation de l'air, portant un média filtrant, et des moyens de fixation de ce cadre sur un siège passant muni d'une ouverture à travers laquelle le cadre peut être déplacé pour montage ou démontage du dispositif, ces moyens de fixation comprenant un organe rigide de serrage contre le siège passant et un organe d'étanchéité, compressible par déformation élastique, intercalé entre l'organe rigide et le siège passant.

Dans le cas particulier de la filtration d'air circulant dans un véhicule automobile, l'ouverture du siège passant forme classiquement un accès à un boîtier de canalisation d'air, agencé dans le corps du véhicule, dans lequel est logé le dispositif de filtration.

Habituellement, le cadre comprend une paroi rigide de canalisation d'air destinée à être fixée sur le siège passant. Cette paroi, formant l'organe rigide de serrage contre le siège passant, est généralement délimitée par un bord périphérique, de forme générale rectangulaire, formant épaulement d'appui sur le siège passant. L'organe compressible d'étanchéité, de préférence en mousse synthétique, a généralement une forme de boucle fermée plane. Cet organe d'étanchéité, qui n'a pas de fonction de canalisation d'air, est serré entre l'épaulement d'appui de la paroi rigide et le bord de l'ouverture du siège passant pour assurer une étanchéité entre l'extérieur du véhicule et le boîtier de logement du dispositif de filtration.

L'organe d'étanchéité, en mousse et en forme de boucle fermée plane, est relativement fragile. De ce fait le montage de l'organe d'étanchéité est délicat. Par ailleurs, la paroi rigide de serrage a une forme générale complexe. Or, on souhaite généralement fabriquer cette paroi rigide de serrage par moulage ce qui requiert un moule relativement complexe.

La fragilité de l'organe compressible d'étanchéité et la complexité de l'organe rigide de serrage augmentent les coûts de fabrication du dispositif de filtration.

FR-A-2 772 670 (FR-97 16 262) décrit un dispositif de filtration d'air comprenant un cadre en mousse synthétique portant un média filtrant. Toutefois, ce document ne décrit aucun moyen de fixation de ce cadre sur un siège passant.

L'invention a pour but de proposer un dispositif de filtration du type précité relativement résistant et simple à fabriquer.

A cet effet, l'invention a pour objet un dispositif de filtration d'air, du type précité, **caractérisé en ce que** l'organe d'étanchéité est formé par une paroi de canalisation d'air du cadre, dite paroi proximale, l'organe rigide étant rapporté sur cette paroi proximale.

Suivant d'autres caractéristiques de ce dispositif de filtration ;
- la paroi proximale est munie d'un prolongement formant élément de saisi du cadre ;
- l'organe rigide comprend des moyens de rabattement du prolongement de façon que ce dernier soit sensiblement perpendiculaire à la paroi proximale ;
- les moyens de rabattement comprennent une pince de rabattement venue de matière avec l'organe rigide ;
- la pince de rabattement comprend deux branches dont l'une est formée par un bord périphérique rigide, sensiblement rectiligne, de l'organe rigide et l'autre est formée par une patte déformable élastiquement, venue de matière avec l'organe rigide s'étendant sensiblement parallèlement au bord périphérique rigide ;
- l'organe rigide a une forme générale plane ;
- l'organe rigide a une forme générale annulaire rectangulaire ;
- l'organe rigide est muni d'au moins un oeillet de fixation sur le siège passant ;
- la paroi proximale est en mousse synthétique ou naturelle ;
- le cadre est en matériau compressible par déformation élastique, notamment en mousse synthétique ou naturelle ;
- le périmètre de la paroi proximale est supérieur à celui de l'ouverture du siège passant, la paroi proximale délimitant ainsi un épaulement d'appui du cadre sur le siège passant ;
- le cadre et le média filtrant sont reliés entre eux par une liaison de type soudure miroir.

L'invention a également pour objet une installation de circulation d'air dans un véhicule automobile, **caractérisée en ce qu'**elle comprend un dispositif de filtration tel que défini ci-dessus.

Suivant une autre caractéristique de cette installation, celle-ci approvisionne un habitacle du véhicule en air climatisé ou non.

L'invention sera mieux comprise à la lecture de la description qui va suivre, donnée uniquement à titre d'exemple et faite en se référant aux dessins dans lesquels :
- la figure 1 est une vue en perspective éclatée d'un dispositif de filtration selon l'invention ;
- la figure 2 est une vue de face du dispositif de filtration représenté sur la figure 1 ;
- la figure 3 est une vue en coupe suivant la ligne 3-3 de la figure 2.

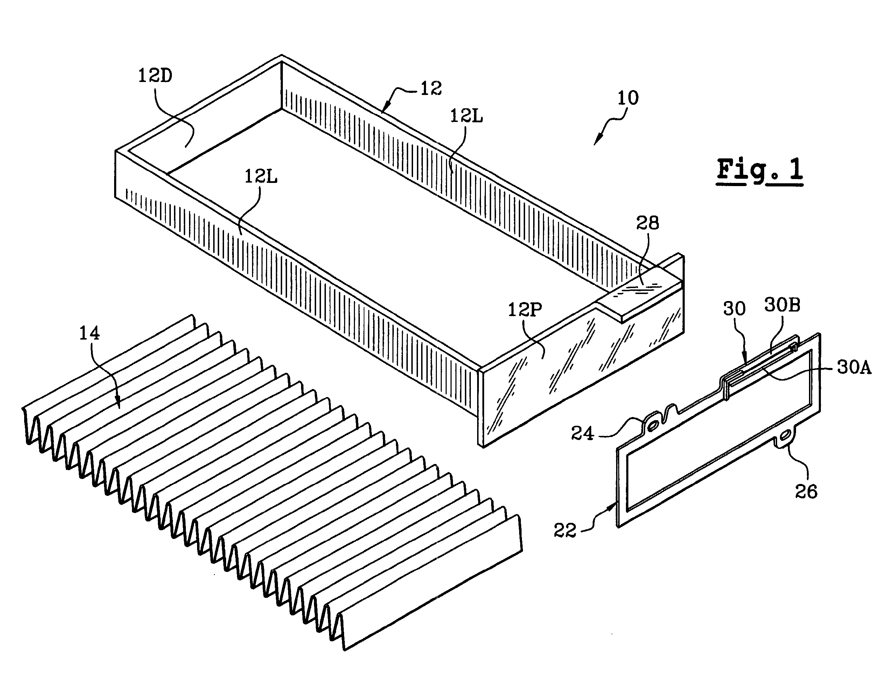

On a représenté sur la figure 1 un dispositif de filtration d'air selon l'invention, désigné par la référence générale 10.

Dans l'exemple illustré, le dispositif de filtration 10 est agencé dans une installation de circulation d'air dans un véhicule automobile. Cette installation est destinée, par exemple, à approvisionner un habitacle du véhicule en air climatisé ou non.

Le dispositif de filtration 10 comprend un cadre 12 de canalisation de l'air, portant un média filtrant 14, de type classique, par exemple tel que décrit dans FR-A-2 779 662 (FR-98 07 273) ou FR-A-2 772 670 (FR-97 16 262). Le média filtrant 14 comprend, dans l'exemple illustré, un matériau multicouche agencé en accordéon, porté le cas échéant par des grilles non représentées.

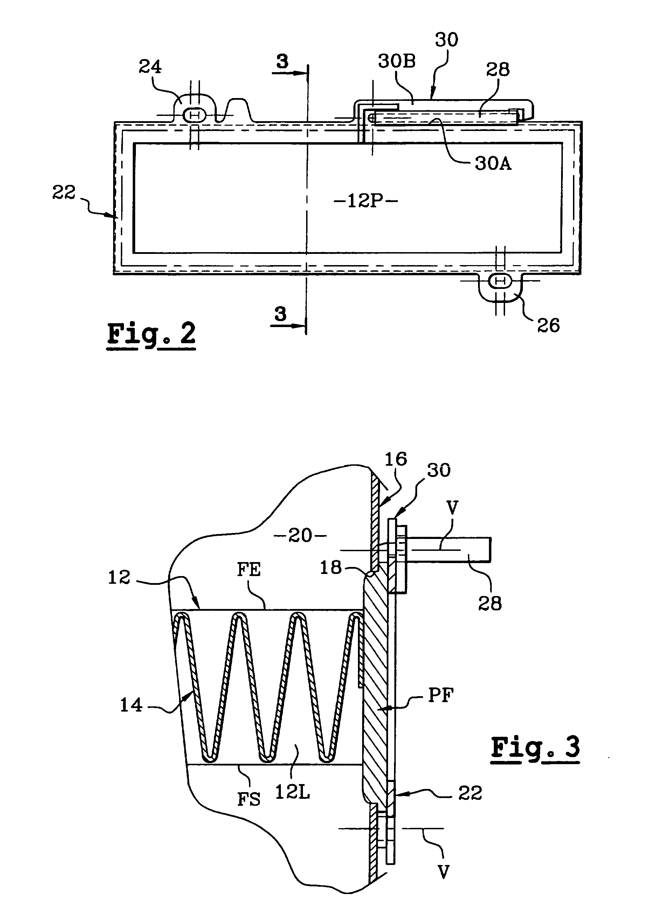

Le cadre 12 est destiné à être fixé sur un siège passant 16, représenté sur la figure 3, muni d'une ouverture 18 à travers laquelle le cadre 12 peut être déplacé pour montage ou démontage du dispositif de filtration 10.

Dans l'exemple décrit, l'ouverture 18 du siège passant 16 forme un accès à un boîtier 20 de canalisation d'air, agencé dans le corps du véhicule. Le cadre 12 est donc agencé dans le boîtier 20 en étant fixé sur le siège passant 16, comme cela est représenté sur la figure 3, à l'aide de moyens qui seront décrits ci-dessous.

Dans ce qui suit un élément sera qualifié de proximal lorsqu'il est proche du siège passant 16 et de distal dans le cas contraire.

Le cadre 12, de forme générale parallélépipédique aplatie, est délimité par quatre parois de canalisation d'air, à savoir deux parois opposées proximale 12P et distale 12D reliées entre elles par deux parois opposées latérales 12L.

Le cadre 12 délimite deux faces passantes opposées respectivement d'entrée d'air FE et de sortie d'air FS (voir figure 3).

L'ouverture 18 a une forme générale rectangulaire autorisant le déplacement des parois distale 12D et latérales 12L du cadre à travers cette ouverture 18.

Chaque paroi 12P, 12D, 12L du cadre a une forme générale rectangulaire plane. Le périmètre de la paroi proximale 12P est supérieur à celui de l'ouverture 18 du siège passant. Ainsi, la paroi proximale 12P délimite un épaulement d'appui du cadre 12 sur le siège passant 16.

Le cadre 12 est fabriqué dans un matériau compressible par déformation élastique, de préférence en mousse synthétique ou naturelle, notamment en mousse de polypropylène. En variante, seule la paroi proximale 12P du cadre pourrait être fabriquée en matériau compressible par déformation élastique.

Le média filtrant 14 est relié au cadre 12 de façon connue en soi, notamment par une opération de soudure miroir. Cette opération, décrite notamment dans FR-A-2 772 670, consiste à chauffer jusqu'à début de fusion des parties de liaison correspondantes du cadre 12 et du média filtrant 14 puis à presser ces parties de liaison les unes contre les autres pour les souder entre elles.

Le cadre 12 est fixé sur le siège passant 16 à l'aide d'un organe rigide 22 de serrage de la paroi proximale 12P contre le siège passant 16. L'organe de serrage 22 est donc rapporté sur la paroi proximale 12P du cadre.

En se référant aux figures 1 et 2, on notera que, dans l'exemple décrit, l'organe rigide 22 a une forme générale plane annulaire rectangulaire. Il est fabriqué par exemple en plastique moulé.

L'organe rigide 22 est muni d'au moins un oeillet, de préférence deux oeillets 24, 26 comme dans l'exemple illustré, destinés à fixer l'organe rigide 22 sur le siège passant 16, notamment à l'aide de vis V schématisées en traits mixtes sur la figure 3.

De préférence, la paroi proximale 12P est munie d'un prolongement 28 formant élément de saisi du cadre 12, notamment pour permettre le retrait de ce cadre 12 du boîtier 20 en vue par exemple du remplacement du média filtrant 14 porté par ce cadre 12.

Le prolongement 28 est rabattu, sensiblement perpendiculairement à la paroi proximale 12P, au moyen d'une pince 30 venue de matière avec l'organe rigide 22.

La pince de rabattement 30 comprend deux branches. Une première branche 30A est délimitée par un bord périphérique rigide, sensiblement rectiligne, de l'organe 22. La seconde branche 30B est formée par une patte déformable élastiquement, venue de matière avec l'organe rigide 22. Cette patte 30B s'étend sensiblement parallèlement au bord 30A.

Les branches de la pince 30 sont susceptibles d'être écartées entre elles en poussant la patte 30B vers la paroi distale 12D du cadre ou bien en tirant cette patte 30B à l'opposé de cette paroi distale 12D.

On précisera ci-dessous les principaux aspects du montage du dispositif de filtration 10 liés à l'invention.

Le cadre 12, muni du média filtrant 14, est facile à monter dans le boîtier 20. Il suffit pour cela d'introduire le cadre 12 dans l'ouverture 18 du siège passant jusqu'à mettre en butée le bord périphérique de la paroi proximale 12P du cadre contre le siège passant 16. Puis, on fixe l'organe rigide 22 sur le siège passant 16 en serrant la paroi proximale 12P du cadre entre ce siège passant 16 et l'organe rigide 22, au moyen des vis V.

L'invention ne se limite pas au mode de réalisation décrit ci-dessus.

En particulier, l'utilisation du dispositif de filtration selon l'invention n'est pas limitée à une installation de circulation d'air dans un véhicule automobile. En effet, le dispositif de filtration selon l'invention peut être utilisé dans des installations de circulation d'air très variées.

Parmi les avantages de l'invention, on notera que le cadre 12, en matériau compressible élastiquement, est simple à fabriquer notamment du fait de sa forme simple.

Par ailleurs, la paroi proximale 12P du cadre, en matériau compressible élastiquement, forme un organe d'étanchéité relativement résistant par rapport à un organe d'étanchéité classique annulaire. Ainsi, il n'est pas nécessaire de requérir un organe d'étanchéité supplémentaire lors du montage du cadre sur le siège passant. De plus, le prolongement 28 de la paroi proximale 12P permet d'extraire facilement le cadre 12 du boîtier 20.

Enfin, l'organe rigide de serrage 22, de forme générale plane, est également simple à fabriquer, notamment par moulage.

La simplification de la structure du cadre 12 et de l'organe rigide de serrage 22 permet de réduire notablement les coûts de fabrication du dispositif de filtration.

## Revendications

1. Dispositif de filtration d'air, du type comprenant un cadre (12) de canalisation de l'air, portant un média filtrant (14), et des moyens de fixation de ce cadre sur un siège passant (16) muni d'une ouverture (18) à travers laquelle le cadre (12) peut être déplacé pour montage ou démontage du dispositif, ces moyens de fixation comprenant un organe rigide (22) de serrage contre le siège passant (16) et un organe d'étanchéité (12P), compressible par déformation élastique, intercalé entre l'organe rigide et le siège passant, **caractérisé en ce que** l'organe d'étanchéité est formé par une paroi (12P) de canalisation d'air du cadre, dite paroi proximale, l'organe rigide (22) étant rapporté sur cette paroi proximale (12P).

2. Dispositif selon la revendication 1, **caractérisé en ce que** la paroi proximale est munie d'un prolongement (28) formant élément de saisi du cadre (12).

3. Dispositif selon la revendication 2, **caractérisé en ce que** l'organe rigide comprend des moyens de rabattement du prolongement (28) de façon que ce dernier soit sensiblement perpendiculaire à la paroi proximale (12P).

4. Dispositif selon la revendication 3, **caractérisé en ce que** les moyens de rabattement comprennent une pince (30) de rabattement venue de matière avec l'organe rigide (22).

5. Dispositif selon la revendication 4, **caractérisé en ce que** la pince de rabattement comprend deux branches dont l'une (30A) est formée par un bord périphérique rigide, sensiblement rectiligne, de l'organe rigide (22) et l'autre (30B) est formée par une patte déformable élastiquement, venue de matière avec l'organe rigide (22) s'étendant sensiblement parallèlement au bord périphérique rigide (30A).

6. Dispositif selon l'une quelconque des revendications précédentes, **caractérisé en ce que** l'organe rigide (22) a une forme générale plane.

7. Dispositif selon l'une quelconque des revendications précédentes, **caractérisé en ce que** l'organe rigide (22) a une forme générale annulaire rectangulaire.

8. Dispositif selon l'une quelconque des revendications précédentes, **caractérisé en ce que** l'organe rigide (28) est muni d'au moins un oeillet (22, 24) de fixation sur le siège passant (16).

9. Dispositif selon l'une quelconque des revendications précédentes, **caractérisé en ce que** la paroi proximale (12P) est en mousse synthétique ou naturelle.

10. Dispositif selon l'une quelconque des revendications précédentes, **caractérisé en ce que** le cadre (12) est en matériau compressible par déformation élastique, notamment en mousse synthétique ou naturelle.

11. Dispositif selon l'une quelconque des revendications précédentes, **caractérisé en ce que** le périmètre de la paroi proximale (12P) est supérieur à celui de l'ouverture (18) du siège passant, la paroi proximale (12P) délimitant ainsi un épaulement d'appui du cadre (12) sur le siège passant (16).

12. Dispositif selon l'une quelconque des revendications précédentes, **caractérisé en ce que** le cadre (12) et le média filtrant (14) sont reliés entre eux par une liaison de type soudure miroir.

13. Installation de circulation d'air dans un véhicule automobile, **caractérisée en ce qu**'elle comprend un dispositif de filtration (10) selon l'une quelconque des revendications précédentes.

14. Installation selon la revendication 13, **caractérisée en ce qu**'elle approvisionne un habitacle du véhicule en air climatisé ou non.

## Claims

1. An air filter device of the type comprising a frame (12) for channeling air, carrying a filter medium (14), and fastener means for fastening the frame on a through seat (16) provided with an opening (18) through which the frame (12) can be moved for installing or removing the device, said fastener means comprising a rigid member (22) for clamping against the through seat (16) and a sealing member (12P) that is compressible in elastic deformation, interposed between the rigid member and the through seat, the device being **characterized in that** the sealing member is formed by an air-channeling wall (12P) of the frame, referred to as the proximal wall, the rigid member (22) being fitted on said proximal wall (12P).

2. A device according to claim 1, **characterized in that** the proximal wall is provided with an extension (28) forming an element for taking hold of the frame (12).

3. A device according to claim 2, **characterized in that** the rigid element includes means for tilting the extension (28) so that it is substantially perpendicular to the proximal wall (12P).

4. A device according to claim 3, **characterized in that** the tilting means comprise a tilting clamp (30) formed integrally with the rigid member (22).

5. A device according to claim 4, **characterized in that** the tilting clamp comprises two branches, one of which (30A) is formed by a substantially rectilinear, rigid peripheral edge of the rigid member (22), and the other of which (30B) is formed by an elastically deformable tab integrally molded with the rigid member (22) and extending substantially parallel to the rigid peripheral edge (30A).

6. A device according to any preceding claim, **characterized in that** the rigid member (22) is generally plane in shape.

7. A device according to any preceding claim, **characterized in that** the rigid member (22) is generally in the form of a rectangular annulus.

8. A device according to any preceding claim, **characterized in that** the rigid member (28) is provided with at least one eyelet (22, 24) for securing to the through seat (16).

9. A device according to any preceding claim, **characterized in that** the proximal wall (12P) is made of synthetic or natural foam.

10. A device according to any preceding claim, **characterized in that** the frame (12) is made of material that is compressible in elastic deformation, in particular a synthetic or natural foam.

11. A device according to any preceding claim, **characterized in that** the perimeter of the proximal wall (12P) is greater than the perimeter of the opening (18) in the through seat, the proximal wall (12P) thus defining a shoulder enabling the frame (12) to bear against the through seat (16).

12. A device according to any preceding claim, **characterized in that** the frame (12) and the filter medium (14) are interconnected by a bond of the mirror weld type.

13. An installation for circulating air in a motor vehicle, the installation being **characterized in that** it includes a filter device (10) according to any preceding claim.

14. An installation according to claim 13, **characterized in that** it feeds a vehicle cabin with optionally conditioned air.

## Patentansprüche

1. Luftfiltervorrichtung, die einen Rahmen (12) zur Luftkanalisierung umfasst, der ein Filtrationsmittel (14) trägt, und Mittel zur Befestigung dieses Rahmens auf einem Durchgangssitz (16) mit einer Öffnung (18), durch die der Rahmen (12) für die Montage oder die Demontage der Vorrichtung geschoben werden kann, wobei diese Mittel zur Befestigung ein starres Element (22) zum Spannen gegen den Durchgangssitz (16) umfassen, und ein Dichtungselement (12P), das durch elastische Verformung kompressibel ist, das zwischen das starre Element und den Durchgangssitz eingeschoben ist, **dadurch gekennzeichnet, dass** das Dichtungselement durch eine Wand (12P) des Rahmens zur Luftkanalisierung, proximale Wand genannt, gebildet ist, wobei das starre Element (22) auf diese proximale Wand (12P) aufgesetzt ist.

2. Vorrichtung nach Anspruch 1, **dadurch gekennzeichnet, dass** die proximale Wand mit einer Verlängerung (28) versehen ist, die ein Greifelement des Rahmens (12) bildet.

3. Vorrichtung nach Anspruch 2, **dadurch gekennzeichnet, dass** das starre Element Mittel zum Umklappen der Verlängerung (28) in einer Weise umfasst, dass diese im Wesentlichen senkrecht zur proximalen Wand (12P) ist.

4. Vorrichtung nach Anspruch 3, **dadurch gekennzeichnet, dass** die Mittel zum Umklappen eine Klappzange (30) umfassen, die einstückig mit dem starren Element (22) ist.

5. Vorrichtung nach Anspruch 4, **dadurch gekennzeichnet, dass** die Klappzange zwei Arme umfasst, von denen der eine (30A) durch einen starren äußeren im Wesentlichen geradlinigen Rand des starren Elements (22) gebildet ist und von denen der andere (30B) durch eine elastisch verformbare Klaue gebildet ist, die einstückig mit dem starren Element (22) ist und die sich im Wesentlichen parallel zum starren äußeren Rand (30A) erstreckt.

6. Vorrichtung nach einem der vorhergehenden Ansprüche, **dadurch gekennzeichnet, dass** das starre Element (22) im Allgemeinen eine ebene Form aufweist.

7. Vorrichtung nach einem der vorhergehenden Ansprüche, **dadurch gekennzeichnet, dass** das starre Element (22) im Allgemeinen eine rechteckige ringförmige Form aufweist.

8. Vorrichtung nach einem der vorhergehenden Ansprüche, **dadurch gekennzeichnet, dass** das starre Element (28) mit zumindest einer Öse (22, 24) zur Befestigung auf dem Durchgangssitz (16) versehen ist.

9. Vorrichtung nach einem der vorhergehenden Ansprüche, **dadurch gekennzeichnet, dass** die proximale Wand (12P) aus synthetischem oder natürlichem Schaumstoff besteht.

10. Vorrichtung nach einem der vorhergehenden Ansprüche, **dadurch gekennzeichnet, dass** der Rahmen (12) aus einem durch elastische Verformung kompressiblen Material besteht, insbesondere aus synthetischem oder natürlichem Schaumstoff.

11. Vorrichtung nach einem der vorhergehenden Ansprüche, **dadurch gekennzeichnet, dass** der Umfang der proximalen Wand (12P) größer als derjenige von der Öffnung (18) des Durchgangssitzes ist, wobei die proximale Wand (12P) somit eine Stützschulter des Rahmens (12) auf dem Durchgangssitz (16) abgrenzt.

12. Vorrichtung nach einem der vorhergehenden Ansprüche, **dadurch gekennzeichnet, dass** der Rahmen (12) und das Filtrationsmittel (14) durch Spiegelschweißen miteinander verbunden sind.

13. Anlage zur Luftumwälzung in einem Kraftfahrzeug, **dadurch gekennzeichnet, dass** sie eine Filtervorrichtung (10) nach einem der vorhergehenden Ansprüche umfasst.

14. Anlage nach Anspruch 13, **dadurch gekennzeichnet, dass** sie ein Fahrerhaus des Fahrzeuges mit klimatisierter Luft versorgt oder nicht.
